# EUROPÄISCHE PATENTSCHRIFT

(11) **EP 1 327 802 B1**
(45) Veröffentlichungstag und Bekanntmachung des Hinweises auf die Patenterteilung: **05.04.2006**
(21) Anmeldenummer: 02026121.0
(22) Anmeldetag: 23.11.2002
(51) Int. Cl.: F16J 15/42

(54) **Hydraulische Dichtungsanordnung**
Hydraulic sealing arrangement
Dispositif de joint hydraulique

(30) Priorität: 14.01.2002 DE 10201055
(43) Veröffentlichungstag der Anmeldung: 16.07.2003
(73) Patentinhaber: Rolls-Royce Deutschland Ltd & Co KG, 15827 Dahlewitz (DE)
(72) Erfinder: Rensch, Detlef, 14974 Ludwigsfelde (DE)
(74) Vertreter: Weber, Joachim

(56) Entgegenhaltungen:
- EP-A- 1 103 706
- DE-A1- 2 559 667
- DE-A1- 3 328 057
- DE-A1- 19 916 803
- FR-A- 2 621 970
- US-A- 822 802
- US-A- 3 765 688
- US-A- 5 239 750

## Beschreibung

Die Erfindung bezieht sich auf eine hydraulische Dichtungsanordnung nach den Merkmalen des Oberbegriffs des Hauptanspruchs.

Im Einzelnen bezieht sich die Erfindung auf eine hydraulische Dichtungsanordnung zwischen zwei relativ zueinander rotierenden Wellen, insbesondere eines Gasturbinen-Triebwerks.

Eine hydraulische Dichtungsanordnung der genannten Art ist aus der DE 199 16 803 A1 vorbekannt. Eine ähnliche Dichtungsausgestaltung zeigt auch die EP 1 103 706 A2.

Derartige hydraulische Dichtungsanordnungen dienen dazu, zwei mit unterschiedlichen Drehzahlen zueinander rotierende Wellen, die beispielsweise eine Niederdruckwelle und eine Hochdruckwelle sein können, so gegeneinander abzudichten, dass ein Bereich mit relativ hohem Druck gegen einen Bereich mit relativ niedrigem Druck abgeschlossen werden kann. Das Grundkonzept derartiger hydraulischer Dichtungsanordnungen ist mit einem Fliehkraftsiphon vergleichbar.

Zugleich dienen diese hydraulischen Dichtungsanordnungen dazu, zumindest ein Lager mit Schmiermittel oder Hydraulikfluid zu versehen, welches die beiden Wellen gegeneinander lagert.

Die in der DE 199 16 803 A1 beschriebene Dichtungsanordnung arbeitet zufriedenstellend, sie hat jedoch den Nachteil, dass sie abhängig von den konstruktiven Gegebenheiten, einen höheren Montageaufwand erfordert. Weiterhin ist an der zweiten, äußeren Welle (Hochdruckwelle) eine Ringnut erforderlich, welche in der Herstellung zusätzliche Maßnahmen erfordert. Diese Ausgestaltung ist somit beispielsweise bei Gasturbinen-Triebwerken, bei welchen eine Turbinenscheibe und eine Lagerwelle einstückig miteinander ausgebildet sind, nicht oder nur mit großem Aufwand nutzbar. Weiterhin kann es nachteilig sein, dass die Dichtung sich dicht an der Turbine befindet, wodurch der innere Teil der hydraulischen Dichtungsanordnung mit einer relativ langen Welle mit der Niederdruck-Turbinenwelle (erste, innere Welle) verbunden ist. Hierdurch können sich rotordynamische Probleme ergeben.

Der Erfindung liegt die Aufgabe zu Grunde, eine hydraulische Dichtungsanordnung der eingangs genannten Art zu schaffen, welche einfach aufgebaut ist, welche kostengünstig herstellbar ist und welche leicht montiert werden kann.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass der Ringraum durch ein erstes und ein zweites Außenschalenteil gebildet wird, welche an der zweiten Welle gelagert sind.

Die erfindungsgemäße hydraulische Dichtungsanordnung zeichnet sich durch eine Reihe erheblicher Vorteile aus. Da der Ringraum durch zwei Außenschalenteile gebildet wird, welche als separate Teile gefertigt und eingebaut werden können, ist der konstruktive Aufwand an der zweiten, äußeren Welle weitaus geringer, als bei den aus dem Stand der Technik bekannten Konstruktionen. Weiterhin vereinfacht sich die Montage ganz erheblich, da die beiden Außenschalenteile lediglich ineinander gesteckt und zueinander positioniert werden müssen.

Besonders günstig erweist es sich dabei, wenn das erste und das zweite Außenschalenteil zur Bildung des Ringraumbereichs teleskopartig zueinander angeordnet sind. Hierbei kann es besonders vorteilhaft sein, wenn der Ringraumbereich, durch welchen das Hydraulikmedium aus der Dichtungsanordnung abgeführt wird, durch die teleskopartige Anordnung der beiden Außenschalenteile gebildet wird.

Um zusätzlich eine Fixierung bzw. Abdichtung der Außenschalenteile gegenüber der ersten, inneren Welle zu gewährleisten, kann es günstig sein, wenn eines der Außenschalenteile, bevorzugt das erste Außenschalenteil mittels' einer Dichtung gegen die erste Welle abgedichtet ist. Diese Dichtung kann beispielsweise in Form eines Gleitrings, eines Kolbenrings oder in ähnlicher Weise ausgebildet sein.

Um eine axiale Halterung der Außenschalenteile zu gewährleisten, kann es besonders günstig sein, wenn zumindest eines der Außenschalenteile mittels eines Sicherungsrings axial fixiert ist. Ein derartiger Sicherungsring ist einfach montierbar und erfordert nur einen geringen konstruktiven Aufwand.

Im Folgenden wird die Erfindung anhand eines Ausführungsbeispiels in Verbindung mit der Zeichnung beschrieben. Dabei zeigt:
- Fig. 1: Eine vereinfachte Teil-Längsansicht einer hydraulischen Dichtungsanordnung nach dem Stand der Technik,
- Fig. 2: eine Schnittansicht, analog Fig. 1, eines Ausführungsbeispiels der Erfindung, und
- Fig. 3: eine vergrößerte Darstellung des in Fig. 2 gezeigten Ausführungsbeispiels.

Die Figur zeigt einen Stand der Technik, wie er beispielsweise aus der DE 199 16 803 A1 vorbekannt ist.

Mit der Bezugsziffer 1 ist eine erste Welle eines Zweiwellen-Gasturbinen-Flugtriebwerks bezeichnet, während die Bezugsziffer 2 eine zweite Welle bezeichnet, die radial außen liegend zu der ersten Welle angeordnet ist. Die beiden Wellen rotieren beide mit unterschiedlicher Geschwindigkeit und somit auch relativ zueinander (dabei aber bevorzugt in gleichem Drehsinn) um eine Rotationsachse 3 des Gasturbinen-Flugtriebwerks. Die Wellen 1, 2, von denen jeweils lediglich ein Teilabschnitt dargestellt ist, sind konzentrisch zueinander angeordnet, wobei die erste Welle 1 die Niederdruckwelle darstellt und somit innerhalb der zweiten Welle 2, welche die Hochdruckwelle ist, angeordnet ist. Mit der Bezugsziffer 4 ist ein Lager der Hochdruckwelle 2 bezeichnet.

Rechtsseitig dieses Lagers 4 sowie in Radialrichtung senkrecht zur Rotationsachse 3 außerhalb der Welle 2 liegt somit ein Bereich des Gasturbinen-Innenraums, in welchem ein relativ niedriger Druck herrscht. Linksseitig des Lagers 4 sowie in Radialrichtung innerhalb der Welle 2 liegt ein Bereich mit relativ hohem Druck. Diese beiden Bereiche sind mittels der hydraulischen Dichtungsanordnung gegeneinander abzudichten, wobei die in ihrer Gesamtheit mit den Bezugszeichen 5 bezeichnete hydraulische Dichtungsanordnung zwischen den beiden Wellen 1, 2 vorgesehen ist.

Die hydraulische Dichtungsanordnung 5 wird im Wesentlichen durch einen an der Innenseite der außen liegenden Welle 2 vorgesehenen und sich dabei über deren Umfang in Radialrichtung nach außen erstreckenden Ringraum 5a gebildet. In diesem Ringraum 5a ragt ein an der innenliegenden Welle 1 vorgesehener, über deren Umfang sich ebenfalls in Radialrichtung nach außen erstreckender Steg 5b hinein. Ein großer Teil des Ringraums 5a und insbesondere derjenige Teilbereich, in welchem das freie Ende des Stegs 5b liegt, ist bzw. wird mit Öl aus dem Ölkreislauf des Gasturbinen-Triebwerks oder allgemein mit einem Hydraulikmedium befüllt. Dies erfolgt über einen Eintrittsbereich 5d.

Über diesen ebenfalls ringförmigen, rechtsseitig des Stegs 5b angeordneten Eintrittsbereich 5d kann das Hydraulikmedium in Form eines zwischen die beiden Wellen 1, 2 eingebrachten Öl-Spritzstrahles auch zur Schmierung des Lagers 4 dienen.

Auf Grund der Rotation der beiden Wellen 1, 2 und der damit verbundenen Fliehkrafteffekte lagert sich das eingebrachte Hydraulikmedium an der radial außen liegenden Innenwand der außen liegenden Welle 2 an. Somit gelangt, ebenfalls unter Fliehkrafteinfluss, das Hydraulikmedium auch in den in der Welle 2 vorgesehenen Ringraum 5a, der gegenüber demjenigen Bereich der Innenwand, in welchem das Hydraulikmedium 5c zugeführt wird, in Radialrichtung betrachtet weiter außen liegt. Dabei sammelt sich das Hydraulikmedium im Ringraum 5a sowohl linksseitig als auch rechtsseitig des Steges 5b an, sodass hierdurch nach Art eines Siphons eine optimale hydraulische Abdichtung entsteht.

Linksseitig des Stegs 5b liegt die Oberfläche bzw. der Flüssigkeitsspiegel des Hydraulikmediums dabei radial weiter außen als rechtsseitig des Stegs 5b, da der letztgenannte rechtsseitige Bereich des Stegs 5b mit dem Bereich in Verbindung steht, in welchem ein erheblich niedrigerer Druck herrscht.

Im Übrigen kann überschüssiges Hydraulikmedium, welches auf Grund der Differenzdruckverhältnisse zwischen den beiden Bereichen mit niedrigem Druck und hohem Druck im Ringraum 5a nicht weiter in den Bereich linksseitig des Steges 5b gelangen kann, entsprechend abgeführt werden.

Zu weiteren konstruktiven Ausgestaltungen wird auf den Stand der Technik verwiesen.

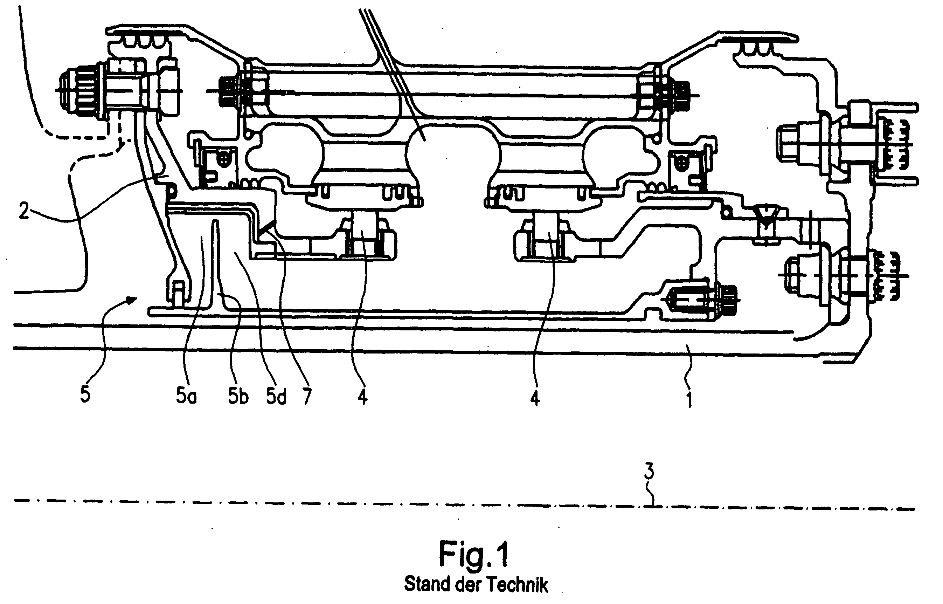

Aus der Darstellung der Fig. 1 ergibt sich, dass ein nicht unerheblicher Montageaufwand sowie ein entsprechender konstruktiver Aufwand erforderlich sind, um die hydraulische Dichtungsanordnung auszubilden bzw. zu montieren.

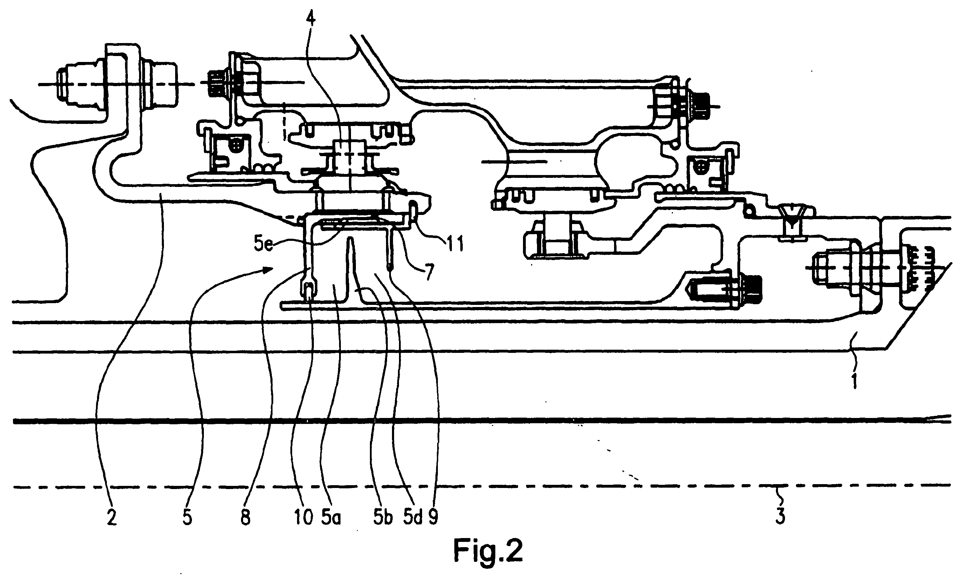

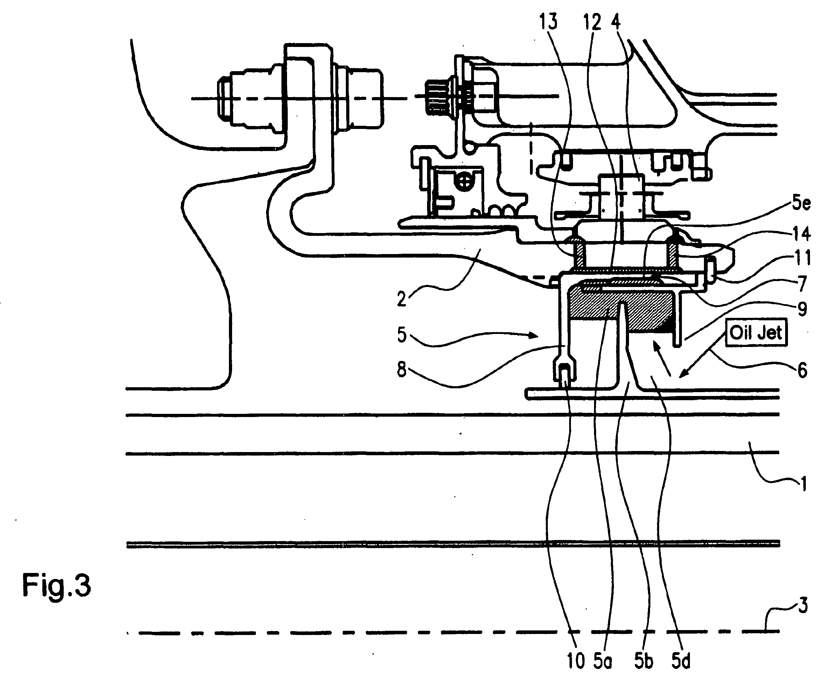

Die Fig. 2 und 3 zeigen ein Ausführungsbeispiel der erfindungsgemäßen hydraulischen Dichtungsanordnung. Gleiche Teile sind, im Vergleich zu der Darstellung der Fig. 1, mit gleichen Bezugsziffern versehen.

Erfindungsgemäß ist somit vorgesehen, dass der Ringraum 5a durch ein erstes Außenschalenteil 8 sowie ein zweites Außenschalenteil 9 gebildet wird. Teil 8 und 9 sind relativ zueinander in geeigneter Weise (Nase) gegen Verdrehen gesichert. Die beiden Außenschalenteile 8 und 9 weisen im Querschnitt im Wesentlichen ein Winkelprofil auf (siehe insbesondere Fig. 3). Die jeweiligen axialen Schenkel sind dabei teleskopartig ineinander geschoben, um auf diese Weise den Ringraumbereich 5e zu bilden. Die zusammengefügten Aussenschalenteile 8 und 9 sind relativ zur zweiten, äußeren Welle lokal gegen Verdrehen gesichert.

An dem ersten Außenschalenteil 8 ist weiterhin zumindest eine Öffnung 7 vorgesehen, um Hydraulikmedium aus dem Ringraumbereich 5e in eine Kammer 12 zu überführen, aus welchem das Hydraulikmedium über radiale Kanäle 13, 14 dem Lager 4 zugeführt werden kann.

Zur axialen Sicherung des zweiten Außenschalenteils 9 ist ein Sicherungsring 11 vorgesehen, welcher in eine Nut der zweiten Welle 2 einbringbar ist.

Zur Abdichtung des radialen Schenkels des ersten Außenschalenteils 8 dient eine Dichtung 10, welche ähnlich einem Kolbenring ausgebildet sein kann.

Die erfindungsgemäße hydraulische Dichtung besteht somit aus einem Innenteil (Steg 5b), das mit der Drehzahl der Niederdruckturbinenwelle (erste, innere Welle 1) dreht sowie aus zwei separaten Außenteilen (Außenschalenteile 8, 9), die ineinander gesteckt und mittels des Sicherungsrings 11 gesichert sind und somit die Außenkontur der Dichtungsanordnung bilden. Die Dichtung 10 dient dazu, beim Stillstand des Triebwerks eine entsprechende Abdichtung vorzusehen.

Die Außenschalenteile 8, 9 enthalten außerdem geeignete Nuten, Abstandshalter, Drain-Löcher (Öffnung 7), um sicherzustellen, dass ein kontinuierlicher Ölstrom bzw. Strom von Hydraulikmedium durch die hydraulische Dichtungsanordnung vorhanden ist und so strömt, dass die Dichtungsanordnung möglichst vollständig durchflossen wird.

Das Hydraulikmedium wird nachfolgend direkt zur Schmierung des Lagers 4 verwendet.

Die Größe des Ölstroms bzw. Stroms an Hydraulikmedium richtet sich einerseits nach der erforderlichen Mindestmenge, die benötigt wird, um eine ausreichende Kühlung der Dichtungsanordnung im Betrieb und nach Abschalten des Triebwerks sicherzustellen und andererseits nach der erforderlichen Schmierölmenge für das radial weiter außenliegende Lager 4.

Die erfindungsgemäße hydraulische Dichtungsanordnung ist an der Lagerwelle der Hochdruckturbine direkt im Bereich des Lagers 4 einbaubar.

Der Ölstrom (Strom von Hydraulikmedium) wird somit in Richtung des Ölstrahls 6 (siehe Fig. 3) über einen Eintrittsbereich 5d auf das langsamer rotierende Innenteil (Steg 5b) der hydraulischen Dichtungsanordnung zugeführt. Von dort gelangt das Öl (Hydraulikfluid) in die Dichtungsanordnung selbst, wo es entlang der Wandung des zweiten Außenschalenteils 9 bis zu dessen vorderem Ende und von dort zwischen dem ersten und dem zweiten Außenschalenteil 8 bzw. 9 zurückfließt. Hierdurch wird die Dichtungsanordnung gekühlt. Nachfolgend wird das Öl (Hydraulikfluid) durch die Öffnungen 7 in die Kammer 12 gedrückt, von wo aus es durch die radialen Kanäle 13, 14 in das Lager 4 gelangt. Von dort aus wird das Öl (Hydraulikfluid), durch im Einzelnen nicht dargestellte Absaugleitungen zu einem Tank rückgeführt.

Die Abdichtung der Lagerkammer des Lagers 4 zwischen Lagerwelle und Stator erfolgt über ein effizientes Dichtungspaket, z. B. eine Kohlegleitringdichtung. Die Lauffläche dieser Dichtung ist in den Wälzlagerinnenring integriert. Hierdurch ist sichergestellt, dass die Lauffläche sehr genau zum Wälzlager positioniert ist und geringe Fertigungs- und Montagekosten verursacht. Die Konstruktion des Lagers 4 ist aus dem Stand der Technik ebenfalls bekannt, sodass auf weitere Detaildarstellungen an dieser Stelle verzichtet werden kann.

Die hydraulische Dichtungsanordnung kann somit direkt dem Lager 4 zugeordnet werden und koppelt Dichtung und Lager ölseitig. Sie ist mechanisch günstiger, da nur geringste Positionsungenauigkeiten der Dichtungsaußenschalen relativ zum Lager auftreten und der Dichtungsinnenteil dichter an seiner Lagerung liegt.

Ein weiterer Vorteil ergibt sich aus der deutlichen Vereinfachung der Ölkreislaufführung sowohl zu der Dichtungsanordnung 5 als auch zu dem Lager 4.

Durch die erfindungsgemäße Ausgestaltung ist eine Doppelnutzung des Öls (Hydraulikmediums) sichergestellt, es dient einerseits zur Dichtungsfunktion inklusive Kühlung der Dichtungsanordnung als auch zum Schmieren.

Im Vergleich zum Stand der Technik sind weniger Teile erforderlich, die zudem einfacher aufgebaut sein können. Die Montage der Dichtungsanordnung selbst sowie der Rotorbauteile ist deutlich einfacher, wodurch sich eine erhebliche Reduzierung der Montagekosten ergibt.

Ein weiterer Vorteil liegt darin, dass die hydraulische Dichtungsanordnung ohne Demontage des Hochdrucklagers 4 und des zugehörigen Lagerträgers oder des Hochdruckrotors zugänglich, montierbar und gegebenenfalls austauschbar ist.

Die erfindungsgemäße Lösung erlaubt neben Lagerwellen, die an die letzte Turbinenscheibe angeschraubt sind, auch Lösungen, bei denen die Lagerwelle und die letzte Turbinenscheibe einstückig oder integriert ausgebildet sind.

### Bezugszeichenliste

- 1: erste, innere Welle
- 2: zweite, äußere Welle
- 3: Rotationsachse
- 4: Lager
- 5: hydraulische Dichtungsanordnung
- 5a: Ringraum
- 5b: Steg
- 5d: Eintrittsbereich
- 5e: Ringraumbereich
- 6: Ölstrahl
- 7: Öffnung
- 8: erstes Außenschalenteil
- 9: zweites Außenschalenteil
- 10: Dichtung
- 11: Sicherungsring
- 12: Kammer
- 13, 14: radialer Kanal

## Patentansprüche

1. Hydraulische Dichtungsanordnung (5) zwischen zwei relativ zueinander, insbesondere in der gleichen Drehrichtung, rotierenden Wellen (1, 2), insbesondere eines Gasturbinen-Triebwerks, wobei die radial außen liegende Welle (2) einen sich über ihren Umfang radial nach außen erstreckenden Ringraum (5a) aufweist, in welchen die radial innenliegende Welle (1) mit einem über ihren Umfang radial nach außen gerichteten Steg (5b) hineinragt und der nach Art eines Siphons zumindest im Bereich des freien Endes des Steges (5b) bei Rotation der Welle (n) (1, 2) über einen Eintrittsbereich (5d) unter Fliehkraftwirkung mit einem Hydraulikmedium befüllbar ist, wobei abzweigend von einem Ringraumbereich (5e) zumindest eine Öffnung (7) zur Abfuhr einer Teilmenge des Hydraulikmediums vorgesehen ist, **dadurch gekennzeichnet, dass** der Ringraum (5a) durch ein erstes (8) und ein zweites (9) Außenschalenteil gebildet wird, welche an der zweiten Welle (2) gelagert sind.

2. Dichtungsanordnung nach Anspruch 1, **dadurch gekennzeichnet, dass** das erste (8) und das zweite (9) Außenschalenteil unter Bildung des Ringraumbereichs (5e) teleskopartig zueinander angeordnet sind.

3. Dichtungsanordnung nach Anspruch 2, **dadurch gekennzeichnet, dass** der Ringraumteil (5e) zwischen einander zugeordneten radialen Bereichen des ersten (8) und des zweiten (9) Außenschalenteils gebildet sind.

4. Dichtungsanordnung nach einem der Ansprüche 1 bis 3, **dadurch gekennzeichnet, dass** das erste Außenschalenteil (8) mittels einer Dichtung (10) gegen die erste Welle (1) abgedichtet ist.

5. Dichtungsanordnung nach einem der Ansprüche 1 bis 4, **dadurch gekennzeichnet, dass** das erste (8) und/oder das zweite (9) Außenschalenteil mittels zumindestens einem Sicherungsring (11) in Axialrichtung fixiert ist.

6. Dichtungsanordnung nach einem der Ansprüche 1 bis 5, **dadurch gekennzeichnet, dass** an dem ersten (8) und/oder dem zweiten (9) Außenschalenteil zumindest eine Öffnung (7) zur Abfuhr von Hydraulikmedium zur Versorgung des Lagers (4) vorgesehen ist.

7. Dichtungsanordnung nach einem der Ansprüche 1 bis 6, **dadurch gekennzeichnet, dass** das erste (8) und das zweite (9) Außenschalenteil gegeneinander verdrehgesichert sind.

## Claims

1. Hydraulic sealing arrangement (5) between two shafts (1, 2) especially of a gas turbine engine, rotating relatively to each other, more particularly in the same sense of rotation, where the radially outer shaft (2) has an annulus (5a) extending radially outwards on its circumference into which the radially inner shaft (1) projects with a fin (5b) that extends radially outwards on its circumference, said annulus (5a) can be filled siphon-fashion through an inlet area (5d) under centrifugal effect with a hydraulic fluid at least in the area of the free end of the fin (5b) as the shaft(s)(1, 2) rotate(s), with at least one opening (7) branching off from the annulus area (5e) for the discharge of a partial quantity of hydraulic fluid, **characterized in that** the annulus (5a) is formed by a first outer shell part (8) and a second outer shell part (9) which are situated on the second shaft (2).

2. Sealing arrangement in accordance with Claim 1, **characterized in that** the first outer shell part (8) and the second outer shell part (9) are arranged in a telescopic way forming the annulus area (5e).

3. Sealing arrangement in accordance with Claim 2, **characterized in that** the annulus area (5e) is formed between radially related areas of the first outer shell part (8) and the second outer shell part (9).

4. Sealing arrangement in accordance with one of the Claims 1 to 3, **characterized in that** the first outer shell part (8) is sealed against the first shaft (1) by means of a seal (10).

5. Sealing arrangement in accordance with one of the Claims 1 to 4, **characterized in that** the first outer shell part (8) and/or the second outer shell part (9) is secured in the axial direction by means of at least one retaining ring (11).

6. Sealing arrangement in accordance with one of the Claims 1 to 5, **characterized in that** at least one opening (7) for the discharge of hydraulic fluid for the supply of the bearing (4) is provided on the first outer shell part (8) and/or the second outer shell part (9).

7. Sealing arrangement in accordance with one of the Claims 1 to 6, **characterized in that** the first outer shell part (8) and the second outer shell part (9) are secured against rotation relative to each other.

## Revendications

1. Dispositif de joint hydraulique (5) entre deux arbres (1, 2), notamment d'un moteur à turbine à gaz, tournant relativement l'un par rapport à l'autre en particulier dans le même sens de rotation, sachant que l'arbre (2) placé à l'extérieur dans le sens radial présente un espace annulaire (5a) s'étendant vers l'extérieur autour de son pourtour dans le sens radial, que l'arbre (1) placé à l'intérieur dans le sens radial fait saillie dans l'espace annulaire (5a) avec une nervure (5b) orientée vers l'extérieur dans le sens radial sur son pourtour, que quand l'arbre/ les arbres (1, 2) est/ sont en rotation, l'espace annulaire (5a) peut être rempli à la manière d'un siphon sous l'effet de la force centrifuge à travers une zone d'entrée (5d) au moins dans la région de l'extrémité libre de la nervure (5b) par un fluide hydraulique, qu'au moins un orifice (7) pour évacuer une partie du fluide hydraulique est prévu, qui part d'une zone de l'espace annulaire (5e), **caractérisé en ce que** l'espace annulaire (5a) est formé par une première (8) et une seconde (9) parties de coque extérieure logées sur le deuxième arbre.

2. Dispositif de joint selon la revendication n° 1, **caractérisé en ce que** la première (8) et la seconde (9) parties de coque extérieure sont disposées de manière télescopique l'une par rapport à l'autre, formant ainsi la zone de l'espace annulaire (5e).

3. Dispositif de joint selon la revendication nº 2, **caractérisé en ce que** la zone de l'espace annulaire (5e) est formée entre des zones radiales conjuguées entre elles de la première (8) et de la seconde (9) parties de coque extérieure.

4. Dispositif de joint selon une des revendications 1 à 3, **caractérisé en ce que** la première partie de coque extérieure (8) est étanchéifiée au moyen d'un joint (10) par rapport au premier arbre (1).

5. Dispositif de joint selon une des revendications 1 à 4, **caractérisé en ce que** la première (8) et/ou la seconde (9) partie(s) de coque extérieure est (sont) fixée(s) au moyen d'au moins un circlip (11) dans le sens axial.

6. Dispositif de joint selon une des revendications 1 à 5, **caractérisé en ce que** sur la première (8) et/ou la seconde (9) partie(s) de coque extérieure est prévu au moins un orifice (7) permettant le passage du fluide hydraulique pour alimenter le palier (4).

7. Dispositif de joint selon une des revendications 1 à 6, **caractérisé en ce que** la première (8) et la seconde (9) parties de coque extérieure sont assurées contre le pivotement de l'une par rapport à l'autre.
